# EUROPEAN PATENT APPLICATION

(11) **EP 1 429 181 A1**
(43) Date of publication of application: **16.06.2004**
(21) Application number: 03028215.6
(22) Date of filing: 09.12.2003
(51) Int. Cl.: G03B 42/02, G01N 23/207

(54) **Image recording and read-out device for analyzing diffraction patterns using a plurality of recording sheets positioned on an endless belt**

(30) Priority: 12.12.2002 JP 2002361523
(71) Applicant: Sakabe, Noriyoshi, 2-37, Kasuga, Tsukuba City (JP)
(72) Inventor: Sakabe, Noriyoshi, 2-37, Kasuga, Tsukuba City (JP)
(74) Representative: von Hellfeld, Axel, Dr. Dipl.-Phys.

(57) **Abstract**

An image data collecting device for analysis of material structure, e.g. crystals, including: an endless belt carrying an accumulated fluorescent sheet for recording a radiant image data from a material to be analyzed; a recording means to record the radiant image data into the accumulated fluorescent sheet by irradiating a given radiant ray onto the material; a reading means to read out the radiant image data by irradiating excitation light; and a deleting means to remove radiant energy remaining in the accumulated fluorescent sheet after reading operation by the reading means and before subsequent recording operation by the recording means.
At the recording section the endless belt has the form of a semi-circle and the crystal is positioned at the center of the (semi-)circle.

## Description

### BACKGROUND OF THE INVENTION

### Field of the Invention

This invention relates to a device for collecting data (information) to analyze material structure such as crystal material utilizing radiant ray, which is employed in crystal analysis for crystals with wide range lattice constants from low molecular weight crystal to protein crystal and in collection of time-divided data for powders, solution diffraction and the like.

### Description of the related art

Conventionally, analysis of material structure is carried out by irradiating radiant ray such as X ray onto a material to be analyzed and obtaining a given diffraction pattern originated from the radiation of the radiant ray. Recently, in order to obtain biochemical information from protein crystal or the like, particularly, three-dimensional structure analysis is researched and developed by utilizing X-ray crystalline structure analysis with radiant ray such as X ray. For example, since the protein crystal has larger lattice constant than the lattice constant of low molecular weight crystal, a large amount of parameters and data are required in the X-ray crystalline structure analysis. In this case, if the radiant ray is employed, the period of time required in the collection of data of the structural analysis can be shortened and the intensity of the thus obtained data can be enhanced originated from the large intensity of the radiant ray.

In the structural analysis, on the other hand, accumulated fluorescent material is employed instead of X-ray photograph film. When a given radiant ray (X-ray, α ray, ultraviolet ray, γ ray and electron ray) is irradiated onto the accumulated fluorescent material, it is partially absorbed and accumulated into the material and then, emits a light which is attenuated with time and depends on the energy accumulated in the material by irradiating excitation light onto the material.

The accumulated fluorescent material has high sensitivity, wide dynamic range and low background noise. A given image data from a material to be analyzed by radiant ray is recorded in a sheet made of the accumulated fluorescent material, and read out of the sheet through luminescence by scanning the sheet with excitation light. The luminescence is attenuated with time, and is read by means of opto-electrical technique. The resultant image data is processed into radiant image data. The above-mentioned process is repeated, and plural radiant image data are collected. Since the image data is stored in the accumulated fluorescent sheet temporarily in order to obtain the intended radiant image data, the accumulated fluorescent sheet can be used repeatedly.

In order to reuse the accumulated fluorescent sheet, the radiant energy remaining in the accumulated fluorescent sheet is removed by the irradiation of visible light and the like after the recorded image data is read out through the attenuating luminescence. In this case, since the recorded image data is deleted, the accumulated fluorescent sheet can be reused.

In the data collecting process utilizing X-ray source commercially available in X-ray diffraction field, two accumulated fluorescent frames are prepared. In this case, in order to enhance the data collecting efficiency, while a given image data is read out of the first accumulated fluorescent sheet, another image data is recorded in the second accumulated fluorescent sheet. Herein, the wording "frame" means a portion to be exposed per one exposure in the accumulated fluorescent sheet.

Conventionally, a radiant image data recording/reading device which is constructed of a unified reading/deleting unit composed of an accumulated fluorescent sheet, an image recording means, an image reading means and a deleting means, and a unit-moving means was employed (see, patent document 1).

### [Patent document 1]

### Japanese Patent Application Laid-open No. 11-072859 (page 1 and Fig. 1)

On the other hand, the use of radiant ray as X-ray source can shorten the recording period of time remarkably, compared with the use of X-ray source commercially available. In contrast, the use of radiant ray can not shorten the reading period of time out of the accumulated fluorescent sheet, so that the collecting efficiency of radiant data information can not be enhanced.

In order to iron out the problem, the inventor found out the following technique: A cylindrical cassette with an accumulated fluorescent sheet therein is prepared. Plural diffraction images are recorded in the cassette, and read out in another reading device.

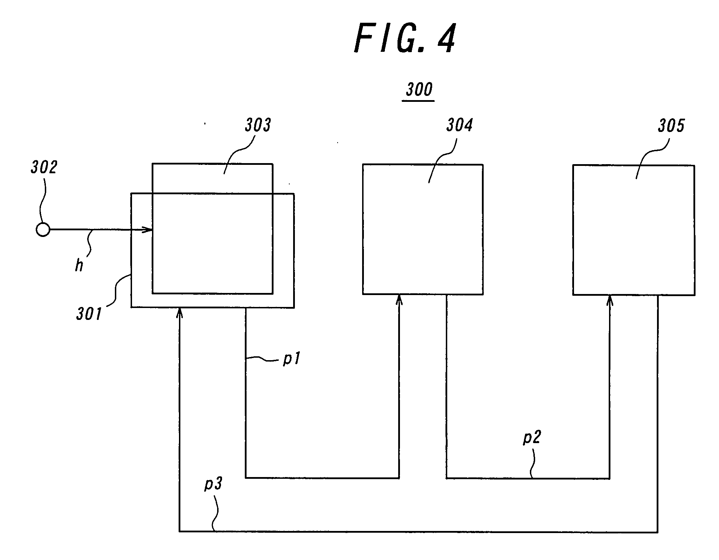

Fig. 4 is a top plan view schematically showing the conventional image data collecting device 300 for analysis of material structure. The collecting device 300 is constructed of the cylindrical cassette 301 with an accumulated fluorescent sheet, the recording section 303 to record radiant image data such as diffraction image in the accumulated fluorescent sheet by the irradiation of the X-ray "h" from the radiant ray source 302, the reading section 304 to read out the radiant image data from the accumulated fluorescent sheet, and the deleting section 305 to delete the image data remaining in the accumulating fluorescent sheet after the reading out of the image data.

The accumulated florescent sheet is prepared over the inner wall of the cylindrical cassette 301. The recording section 303, the reading section 304 and the deleting section 305 are connected to each other with ball bearing supporters (not shown). The cylindrical cassette 301 is conveyed on these sections along the lines designated by the arrows p1-p3. The cylindrical cassette 301 can be installed and rotated in these sections.

When the cylindrical cassette 301 is conveyed to the recording section 303, the frame size to be exposed is defined in the accumulated fluorescent sheet with a movable screen (not shown). After the frame is exposed, the adjacent frames are exposed successively because the cylindrical cassette 301 is rotated in the recording section 303. In this way, plural radiant image data can be recorded in the cylindrical cassette 301.

After the recording operation, the cylindrical cassette 301 is conveyed to the reading section 304 along the line P1 with the ball bearing supporter (not shown). Since in the reading section 304, plural reading heads are prepared in the width direction, the plural radiant image data are read out by rotating the cylindrical cassette 301 in the reading section 304.

After the reading operation, the cylindrical cassette 301 is conveyed to the deleting section 305 along the line P2 with the ball bearing supporter (not shown). The plural radiant image data are deleted by rotating the cylindrical cassette 301 in the deleting section 305. After the deleting operation, the cylindrical cassette 301 is conveyed again to the recording section along the line P3 with the ball bearing supporter (not shown), and plural radiant image data are recorded again in the cylindrical cassette 301.

If two cylindrical cassette are prepared, plural radiant image data can be recorded again in one cylindrical cassette while plural radiant image data are read out of the other cylindrical cassette.

In this case, the reading speed can be developed, and thus, it may be that plural radiant image data corresponding to the crystalline data of the same crystal at different times can be recorded and read successively to realize the collection of the time-divided data. In this case, the three-dimensional structure of the crystal can be analyzed, and in addition, four-dimensional structure of the crystal by referring to time can be analyzed.

With the conventional technique, however, there are some problems as follows:
(1) The number of frame to be defined in one cassette is finite, and thus, the successive recording operation of the time-divided crystalline structure data can not be realized.
(2) Since the weight of the cassette is increased as the radius of the cassette is increased, it takes much time to convey the cassette and the handling becomes complicated.
(3) Since the cassette does not have a rotation shaft physically, it is difficult to rotate the cassette at high speed (e.g., 3 rps or over).
(4) The handling of the cassette makes noise.

### SUMMERY OF THE INVENTION

It is an object of the present invention, in this point of view, to provide an image data collecting device for analysis of material structure which can read out plural radiant image data precisely at high speed irrespective of the number of frame.

It is another object of the present invention to provide an image data collecting device for analysis of material structure which can realize four-dimensional structure analysis through the successive collection of time-divided data irrespective of the number of frame.

In order to achieve the above-mentioned objects, this invention relates to an image data collecting device for analysis of material structure, comprising:
a flexible belt which is formed in ring shape and conveyed in the long direction thereof,
an accumulated fluorescent sheet which is formed in ring shape commensurate with the configuration of the flexible belt and mounted on the flexible belt and where a radiant image data from a material to be analyzed is recorded,
a recording means to record the radiant image data into the accumulated fluorescent sheet by irradiating a given radiant ray onto the material,
a reading means to read out the radiant image data by irradiating excitation light,
   and
a deleting means to remove radiant energy remaining in the accumulated fluorescent sheet after reading operation by the reading means and before subsequent recording operation by the recording means.

In a preferred embodiment, the maximum area subjected to the radiant ray of the accumulated fluorescent sheet is set equal to the readable area of the radiant image data of the accumulated fluorescent sheet.

In another preferred embodiment, the reading means includes plural reading sections which are arranged in the long direction of the belt.

In still another preferred embodiment, the plural reading sections are formed in cylindrical shape.

In a further preferred embodiment, the collecting device comprises a storing means to store a portion of the accumulated fluorescent sheet and composed of bended portions of the belt and the accumulated fluorescent sheet.

In a still further preferred embodiment, the storing means is disposed at least one of spaces between the recording means and the reading means and between the recording means and the deleting means.

### BRIEF DESCRIPTION OF THE DRAWINGS

For better understanding of the present invention, reference is made to the attached drawings, wherein
Fig. 1 is a side view schematically showing an image data collecting device for analysis of material structure according to the present invention,
Fig. 2 is an enlarged view showing the camera and the cassette to install the accumulated fluorescent material of the collecting device shown in Fig. 1,
Fig. 3 is a side view schematically showing another image data collecting device for analysis of material structure according to the present invention,
Fig. 4 is a top plan view showing a conventional image data collecting device for analysis of material structure according to the present invention,
Fig. 5 is a side view schematically showing still another image data collecting device for analysis of material structure which is modified from the one shown in Fig. 1, and
Fig. 6 is a plan view showing a high speed continuous rotating shatter.

### DESCRIPTION OF THE PREFERRED EMBODIMENTS

This invention will be described in detail with reference to the accompanying drawings.

### (Embodiment 1)

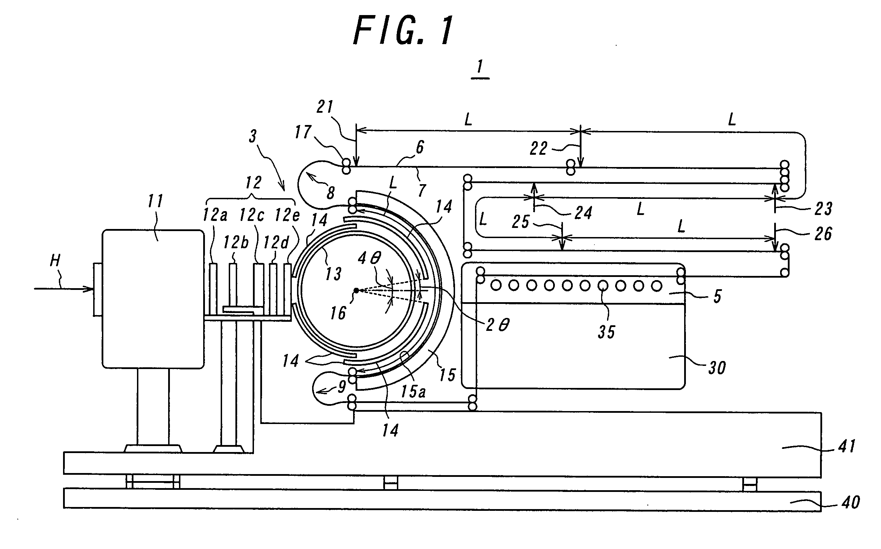

Fig. 1 is a side view schematically showing an image data collecting device for analysis of material structure according to the present invention.
The image data collecting device 1 for analysis of material structure includes the recording section 3, the reading sections 21-26, the deleting section 5, the belt 7, and the storing sections 8-9. In the recording section 3, diffraction image of crystal is recorded in the accumulated fluorescent sheet 6. In the reading sections 21-26, the diffraction image is read out. In each reading section, the arrow designates the position of the first reading head. In the deleting section 5, the diffraction image remaining in the accumulated fluorescent sheet is deleted after the reading operation. The belt 7 is a conveying means for the recording section 3, the reading sections 21-26 and the deleting section 6. In the storing sections 8 and 9, the accumulated florescent sheet is stored after the recording operation or the deleting operation. The above-mentioned sections are prepared on the movable stage 41 mounted on the base 40.

The collecting device 1 will be described in detail, hereinafter.

The belt 7 is flexible and formed in ring shape. The belt 7 is attached to the roller 17 at some points, and thus, conveyed in the long direction. In this case, the belt 7 is pressed to the roller 17, and thus, constitutes an endless belt. The accumulated fluorescent sheet 6 is formed in ring shape and set on the belt 7. Therefore, the accumulated fluorescent sheet 6 is conveyed by the belt 7. The width of the belt 7 is set larger than the width of the accumulated fluorescent sheet 6, and the position of the sheet 6 on the belt 7 is determined by means of linear encoder mounted at the edge of the belt 7. The belt 7 is connected with the recording section 3, the reading section 21-26 and the deleting section 6.

The recording section 3 includes the spectroscope (monochrometer) 11, the optical axis-matching section 12, the camera and the cassette 15 to install the accumulated fluorescent sheet 6. A white X-ray as a radiant ray to be irradiated is spectroscoped by the spectroscope 11 to be converted into a monochromatic X-ray with a given range of wavelength. In the optical axis-matching section 12, the optical axis of the camera is controlled finely and matched to the monochromatic X-ray. In this point of view, the optical axis-matching section 12 is composed of the first, second and fourth image limit slits 12a and 12d, the position sensitive ion chamber (PSIC) 12b and 12c to match the optical axis through the detection of the beam position of the monochromatic X-ray longitudinally and laterally. The reference numeral "12" designates a shatter.

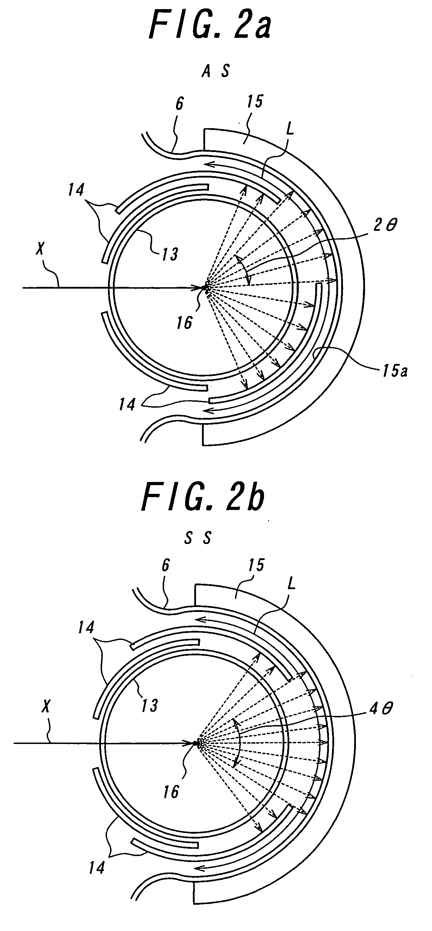

The camera also includes a helium chamber 13 and a screen 14 for selecting area to be exposed. Fig. 2 is an enlarged view showing the camera and the cassette 15 to install the accumulated fluorescent sheet 6. The collecting device will be also described in detail hereinafter.

The helium chamber 13 is formed in cylindrical shape. Some instruments such as crystal holder (not shown) and recording instruments for the diffraction data, and the crystal 16 to be analyzed are installed in the helium chamber 13. At least monochromatic X-ray path of the helium chamber 13 is charged by helium gas in order to enhance the S/N ratio of the diffraction data.

The screen 14 is formed over the cylindrical helium chamber 13. The screen 14 is composed of two arc-shaped shielding plates which are disposed vertically and concentrically for the helium chamber 13. The shielding plates are movable vertically, and the angular aperture (2θ or 4θ) of the shielding plates can be varied vertically. Herein, the upward opening of the screen 14 is defined by "AS" (Asymmetric Setting) and in this case, the angular aperture of the screen 14 is defined by "2θ". The vertical opening of the screen 14 is defined by "SS" (Symmetric Setting) and in this case, the angular aperture of the screen 14 is defined by "4θ". The AS and SS are shown in Figs. 2(a) and (b), respectively.

The cassette 15 is provided so as to surround the screen 14 in semicircle. The cassette 15 includes an inner curved surface 15a shaped in semicircle which is formed concentrically for the screen 14. The length of the inner curved surface 15a is defined by "L". The accumulated fluorescent sheet 6 is adsorbed on the inner curved surface 15a in vacuum. When the angular aperture (2θ or 4θ) of the screen 14 is varied, the upper limit and the lower limit of the diffraction image to be recorded are defined vertically in the accumulated fluorescent sheet 6. In this way, the exposure area of the accumulated fluorescent sheet 6 can be selected and defined as one frame. In this case, therefore, the recording operation is carried out at every frame in the accumulated fluorescent sheet 6.

If the recording operation is carried out successively at every frame, plural diffraction data are recorded in plural frames successively along the length L of the accumulated fluorescent sheet 6. In this way, the recording operation per cassette is carried out. If plural accumulated fluorescent sheets are prepared, the recording operation per cassette can be carried out successively for the sheets.
Since the number of frame can be increased on the number of the reading sections 21-26, plural diffraction data can be recorded successively irrespective of the number of frame through the recording operation per cassette.

The reading sections 21-26 are arranged in the long direction of the belt 7. A laser device as a reading head and a photo-multiplier (not shown) are provided at each reading section. In each reading section, a given excitation light from the laser device is irradiated and scanned on the accumulated fluorescent sheet 6 to generate luminescence which is attenuated with time. The diffraction data is read opto-electrically out of the accumulated fluorescent sheet 6 through the detection of the luminescence with the photo-multiplier.

In this embodiment, six reading sections are prepared as shown in Fig. 1, but the number of reading section is not restricted. Six or more reading sections may be prepared and six or less reading sections may be prepared. Additional reading sections can be provided in between the adjacent reading heads designated by the arrows. The reading speed can be increased as the number of reading section is increased.

This embodiment is characterized that the reading sections 21-26 are arranged successively in the long direction of the belt 7. Herein, the "successive arrangement" means that all of the diffraction data recorded in the accumulated fluorescent sheet 6 can be read out by the reading sections 21-26, and there is no frame not read out by the reading sections 21-26.

The maximum area subjected to X-ray of the accumulated fluorescent sheet 6 in the recording section 3 is set equal to the readable area of each reading section. Therefore, if the accumulated florescent sheet 6 is formed uniformly, particularly in width, the length of the sheet is set equal to the length of the cassette 15.

If the above-mentioned condition is satisfied, the diffraction data of the accumulated fluorescent sheet 6 recorded in the recording section 3 can be read out successively by the reading sections 21-26 with no frame not read out. As a result, the reading speed of the diffraction data in the accumulated fluorescent sheet 6 can be enhanced.

The storing section 8 is disposed between the recording section 3 and the reading sections 21-26. The storing section 8 is composed of a portion of the belt 7 and a portion of the accumulated fluorescent sheet 6 which are curved flexibly. Since the storing section 8 is bended, the accumulated fluorescent sheet 6 is stored by the bending length of the storing section 8. In this case, the diffraction data of the accumulated fluorescent sheet 6 in the storing section 8 can be read out successively by the reading sections 21-26 while another diffraction data is recorded in the accumulated fluorescent sheet 6.

The storage length of the accumulated fluorescent sheet 6 is defined by "L+1". The length "L" corresponds to the length of the inner curved surface 15a of the cassette 15 and thus, to the length of the accumulated fluorescent sheet 6 by one cassette.

The length "1" means an affordable range so that the reading operation can be carried out at the first reading section 21 without the affection against the accumulated fluorescent sheet 6 during recording operation.

With the storing section 8, the diffraction data can be read out smoothly of the accumulated fluorescent sheet 6 by the reading sections 21-26 during the recording operation for the sheet in the recording section 3.

The deleting section 5 is provided next to the reading sections 21-26. In the deleting section 5, the remaining diffraction data is deleted after the reading operation. In the deleting section 5, plural fluorescent lamps 35 are provided in the long direction of the belt 7. The lamps are faced to the belt 7 (accumulated fluorescent sheet 6), and a given fluorescent light is irradiated onto the accumulated fluorescent sheet 6 after the reading operation. In this case, the radiant energy remaining in the accumulated fluorescent sheet 6 is discharged to delete the diffraction data therein. Instead of the fluorescent lamps, low pressure sodium lamps or low pressure thorium lamps may be employed.

In this embodiment, the storing section 9 is provided between the deleting section 5 and the recording section 3. With the storing section 9, as the same manner as the storing section 8, another diffraction data can be recorded into the accumulated fluorescent sheet 6 in the recording section 3 while the diffraction data is deleted from the accumulated fluorescent sheet 6 after the reading operation. In this case, the storage length of the accumulated fluorescent sheet 6 is defined by "L+1".

In the collecting device 1, a uniform exposure section 30 is provided next to the deleting section 30. With the uniform exposure section 30, the sensitivity of the accumulated fluorescent sheet 6 and the reading sensitivity of the reading sections 21-26 can be maintained uniform through compensation.
A small-sized X-ray generator (not shown) is installed in the uniform exposure section 30. A given X-ray is irradiated onto the accumulated fluorescent sheet 6 from the X-ray generator with the uniform distance between the X-ray generator and the sheet 6 while the sheet 6 is conveyed by the belt 7 to realize the sensitivity compensation.

### (Operation)

Next, the operation of the collecting device 1 will be described hereinafter. The crystal 16 is attached onto the helium chamber 13 of the recording section 3, and the exposure area of the accumulated fluorescent sheet 6 is selected by the screen 14 to define one frame thereof to be exposed. After the frame is exposed by the irradiation of the X-ray H, the accumulated fluorescent sheet 6 is conveyed with the belt 7. The exposure operation is repeated, so that plural frames are exposed successively per cassette. As a result, the diffraction image of the crystal 16 is recorded in the crystal 16.

If the angular aperture (2θ or 4θ) of the screen 14 is set small to reduce the opening width (e.g., 0.5mm) thereof, the time-divided data concerning the diffraction data can be obtained with time along the long direction of the accumulated fluorescent sheet 6 when the sheet 6 is moved continuously or intermittently.

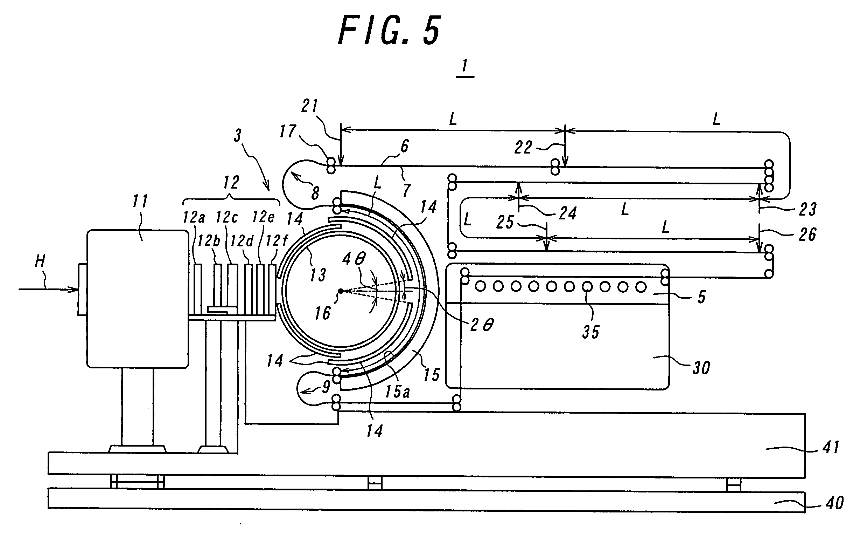

As shown in Fig. 5, the high speed continuous rotating shatter 12f may be provided in the rear side of the shatter 12e. In Fig. 5, the other components are constructed as the ones in Fig. 1. In this embodiment, since the shatter 12f is provided in the rear side of the shatter 12e, the time-divided data can be obtained at higher speed when the accumulated fluorescent sheet 6 is moved commensurate with the shatter speed of the shatter 12f.

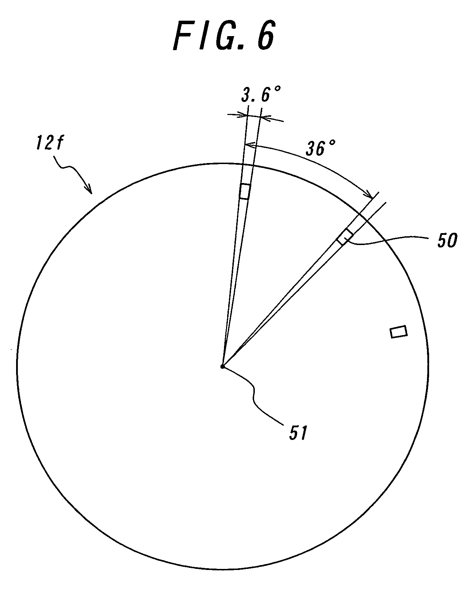

The concrete configuration of the shatter 12f is illustrated in Fig. 6. The shatter 12f is formed in disc shape, and some openings 50 are formed along the periphery of the shatter 12f. The distance between the adjacent openings 50 is defined by an angle of 36 degrees around the rotation axis 51. The number of opening is not restricted, but set to 10, for example. When the shatter 12f is rotated at high speed, the X-ray path is opened and closed intermittently at high speed.

When the shatter 12f is rotated at 1 rps, the shatter speed is set to 10ms (herein, since the diameter of the X-ray is within 0.1-0.3mm, it is not considered), so that the exposure operation is repeated per 100ms. When the angular aperture of the screen 14 corresponds to the 0.5mm length of the accumulated fluorescent sheet 6, the moving speed of the sheet 6 is set to 0.5mm/100ms or over, that is, 5mm/sec or over in order to divide the diffraction image by time. In view of stability of the image division and the prevention of excess high speed operation, the moving speed of the accumulated fluorescent sheet 6 is preferably set within 7-10mm/sec. When the shatter 12f is rotated at 10 rps, the shatter speed is set to 1ms, and the moving speed of the accumulated fluorescent sheet 6 is set within 70-100mm/sec.

The X-ray is irradiated into the crystal 16 intermittently with the shatter 12f, dot-shaped diffraction image is generated and recorded to define the precise exposure time and exposure period of time. As a result, the dose amount of the X-ray can be reduced, so that the crystal 16 can not be almost damaged.

In this embodiment, the shatter 12f is provided in the rear side of the shatter 12e, but may be provided in any position of the X-ray path.

The accumulated fluorescent sheet 6 is conveyed with the belt 7, stored in the storing section 8, and conveyed to the reading sections 21-26 while the recording operation is carried out for the sheet successively in the recording section 3.

In the reading sections 21-26, the reading operation is carried out for the accumulated fluorescent sheet 6 conveyed therein. The above-mentioned successive operation is effective when the recording (exposure) period of time is set shorter than the reading period of time. According to the successive operation, the time-divided data, recorded per cassette, can be read out immediately.

In order to realize data collecting operation, one image data is recorded in the accumulated fluorescent sheet 6 at the recording section 3 and read out of the sheet 6 at the reading section 21 after convey. In this case, the recording period of time is set longer than the reading period of time.

The diffraction data recorded in many frames of the accumulated fluorescent sheet 6 can be read out in the reading section 4 immediately, for example, during the exchange operation of the crystal 16 in the helium chamber 13 of the recording section 3.

After the reading operation, the accumulated fluorescent sheet 6 is conveyed to the deleting section 5, and the remaining diffraction data is deleted. After the deleting operation, the accumulated fluorescent sheet 6 is stored in the storing section 9, and then, conveyed to the recording section 3. In this time, another diffraction data is recorded into the accumulated fluorescent sheet 6.

Since the belt 7 and the accumulated fluorescent sheet 6 are formed in ring shape, the recording operation, the reading operation and the deleting operation can be carried out endless through convey. As a result, the successive operation makes no noise, which is different from the conventional technique where a cylindrical cassette is conveyed to make noise.

### (Embodiment 2)

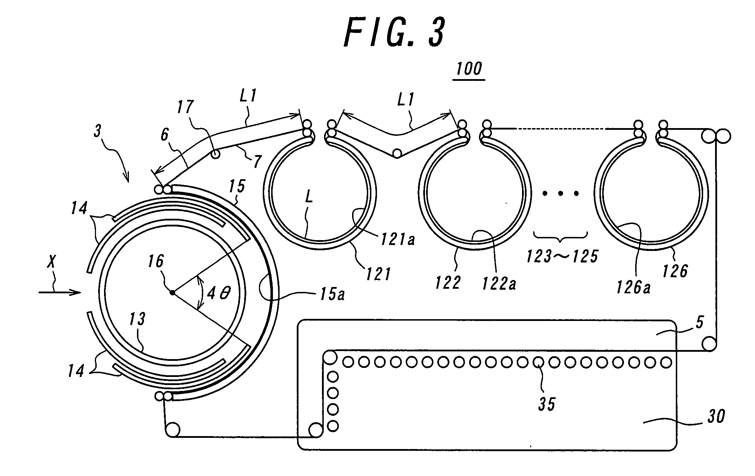

Fig. 3 is a side view schematically showing another image data collecting device for analysis of material structure according to the present invention. In Figs. 1 and 3, like reference numerals are imparted to like components. In this embodiment, therefore, explanation for like components is omitted.

In the image data collecting device 100 for analysis of material structure, the reading sections 121-126 are formed in cylindrical shape, and arranged along the long direction of the belt 7. In Fig. 3, some of the reading sections 121-126 are designated by dots (┌·┘). The number of reading section is not restricted.

The reading sections 121-126 include the inner curved surfaces 121a-126a of which the length is set to "L". The accumulated fluorescent sheet 6 is conveyed with the belt 7 to the reading sections 121-126, and adsorbed on the inner curved surface 121a-126a. Then, the diffraction data recorded in the accumulated fluorescent sheet 6 is read out opto-electrically with laser devices or photomultipliers (not shown) installed in the reading sections 121-126.

In this embodiment, the maximum area subjected to X-ray of the accumulated fluorescent sheet 6 in the recording section 3 is set equal to the readable area of each reading section. Therefore, if the accumulated florescent sheet 6 is formed uniformly, particularly in width, the length of the inner curved surface 15a of the cassette 15 is set equal to the readable length of the sheet 6, that is, the length of the inner curved surfaces 121a-126a of the reading sections 121-126.

In this embodiment, the length L1 of the belt 7 between the edge of the cassette 15 and the first reading section 21 is set equal to the length between the first reading section 121 and the sixth reading section 126. However, the length L1 can be determined arbitrarily so as to satisfy the above-mentioned condition. The diffraction data can not be read out in the space between the edge of the cassette 15 and the first reading section 121, and in each space between the adjacent reading sections.

In this embodiment, the diffraction data, recorded per cassette, can be read out immediately in the reading sections 121-126, and thus, plural image data can be read out successively at high speed.

In this embodiment, the reading sections 121-126 also function as storing sections, so can store the accumulated fluorescent sheet 6 without additional storing section as the first embodiment. Therefore, the recorded image data can be read out while another image data is recorded in the accumulated fluorescent sheet 6 in the recording section 3.

In the collecting device 100, the storing section 9 may be provided between the deleting section 5 and the recording section 3 (see, Fig. 1). In this case, another image data can be recorded in the accumulated fluorescent sheet 6 in the recording section 3 while the remaining image data is deleted in the deleting section 5.

Although the present invention was described in detail with reference to the above examples, this invention is not limited to the above disclosure and every kind of variation and modification may be made without departing from the scope of the present invention.

As mentioned above, according to the present invention, since the number of frame can be increased in the accumulated fluorescent sheet, plural image data can be read out successively and precisely at high speed irrespective of the number of the frame.

Also, the time-divided data can be collected successively irrespective of the number of frame, the four dimensional analysis for a crystal can be realized.

## Claims

1. An image data collecting device for analysis of material structure, comprising:
a flexible belt which is formed in ring shape and conveyed in the long direction thereof,
an accumulated fluorescent sheet which is formed in ring shape commensurate with the configuration of said flexible belt and mounted on said flexible belt and where a radiant image data from a material to be analyzed is recorded,
a recording means to record said radiant image data into said accumulated fluorescent sheet by irradiating a given radiant ray onto said material,
a reading means to read out said radiant image data by irradiating excitation light,
and
a deleting means to remove radiant energy remaining in said accumulated fluorescent sheet after reading operation by said reading means and before subsequent recording operation by said recording means.

2. The collecting device as defined in claim 1, wherein the maximum area subjected to said radiant ray of said accumulated fluorescent sheet is set equal to the readable area of said radiant image data of said accumulated fluorescent sheet.

3. The collecting device as defined in claim 1 or 2, wherein said reading means includes plural reading sections which are arranged in the long direction of said belt.

4. The collecting device as defined in claim 3, wherein said plural reading sections are formed in cylindrical shape.

5. The collecting device as defined in any one of claims 1-4, further comprising a storing means to store a portion of said accumulated fluorescent sheet and composed of bended portions of said belt and said accumulated fluorescent sheet.

6. The collecting device as defined in claim 5, wherein said storing means is disposed at least one of spaces between said recording means and said reading means and between said recording means and said deleting means.
